# EUROPEAN PATENT APPLICATION

(11) **EP 2 264 090 A2**
(43) Date of publication of application: **22.12.2010**
(21) Application number: 10178635.8
(22) Date of filing: 02.03.2005
(51) Int. Cl.: C08J 9/28

(54) **Preparation of foam materials from high internal phase emulsions**

(30) Priority: 02.03.2004 US 549250 P
(62) Divisional of application: 05724814.8
(71) Applicant: The Procter and Gamble Company, Cincinnati, OH 45202 (US)
(72) Inventor: Granberg, Eric, Paul, Cincinnati, OH 45240 (US); Desmarais, Thomas, Allen, Cincinnati, OH 45252 (US)
(74) Representative: Briatore, Andrea

(57) **Abstract**

This application relates to a process for the preparation of a polymeric foam material. The process has the steps of: preparing an oil phase and water phase and mixing the phases to make a water-in-oil emulsion wherein the emulsion has a volume to weight ratio of water phase to oil phase of at least about 4:1 and from about 20% to about 80% of the final volume to weight ratio of water phase to oil phase; increasing the volume to weight ratio of water phase to oil phase in the emulsion to 100% of the final volume to weight ratio of water phase to oil phase by the mixing of additional amount of water phase with the emulsion and curing the monomer component in the oil phase of the water-in-oil emulsion using a polymerization reaction to form a saturated polymeric foam material.

## Description

### FIELD OF THE INVENTION

The present invention relates to a process for preparation of a polymeric foam material. More specifically, the present invention relates to a multistage mixing process for preparation of foam materials from high internal phase emulsion.

### BACKGROUND OF THE INVENTION

The development of microporous foams is the subject of substantial commercial interest. Such foams have found utility in various applications, such as thermal, acoustic, electrical, and mechanical (e.g., for cushioning or packaging) insulators; absorbent materials; filters; membranes; floor mats; toys; carriers for inks, dyes, lubricants, and lotions; and the like. References describing such uses and properties of foams include Oertel, G., "Polyurethane Handbook"; Hanser Publishers: Munich, 1985, and Gibson, L. J.; Ashby, M. F., "Cellular Solids. Structure and Properties"; Pergamon Press: Oxford, 1988. Other uses for foams are generally obvious to one skilled in the art.

Open-celled foams prepared from High Internal Phase Emulsions (hereinafter referred to as "HIPEs") are particularly useful in a variety of applications including absorbent disposable articles (US Patents 5,331,015 (DesMarais et al.) issued July 19, 1994, 5,260,345 (DesMarais et al.) issued November 9, 1993, 5,268,224 (DesMarais et al.) issued December 7, 1993, 5,632,737 (Stone et al.) issued May 27, 1997, 5,387,207 (Dyer et al.) issued February 7, 1995, 5,786,395 (Stone et al.) July 28, 1998, 5,795,921 (Dyer et al.) issued August 18, 1998), insulation (thermal, acoustic, mechanical) (US Patents 5,770,634 (Dyer et al.) issued June 23, 1998, 5,753,359 (Dyer et al.) issued May 19, 1998, and 5,633,291 (Dyer et al.) issued May 27, 1997), filtration (Bhumgara, Z. Filtration & Separation 1995, March, 245-251; Walsh et al. J. Aerosol Sci. 1996, 27, 5629-5630; published PCT application W/O 97/37745, published on October 16, 1997, in the name of Shell Oil Co.), and various other uses. The cited patents and references above are incorporated herein by reference. The HIPE process provides facile control over the density, cell and pore size and distribution, proportion of cell struts to windows, and porosity in these foams.

Economics is an important issue in making HIPE foams commercially attractive. Especially, it is important to make stable HIPE efficiently. There are some attempts to achieve the goal; however there is still substantial opportunity for substantial improvement in stability and efficiency for making HIPE that would improve the economic attractiveness of HIPE foams.

Accordingly, it would be desirable to develop a process for preparing open-celled polymeric HIPE foam materials with the desired properties efficiently.

### SUMMARY OF THE INVENTION

The present invention relates to a process for the preparation of a polymeric foam material generally comprises the steps of: preparing an oil phase and water phase and mixing the phases to make a water-in-oil emulsion wherein the emulsion has a volume to weight ratio of water phase to oil phase of at least about 4:1 and from about 20% to about 80% of the final volume to weight ratio of water phase to oil phase; increasing the volume to weight ratio of water phase to oil phase in the emulsion to 100% of the final volume to weight ratio of water phase to oil phase by the mixing of additional amount of water phase with the emulsion; and curing the monomer component in the oil phase of the water-in-oil emulsion using a polymerization reaction to form a saturated polymeric foam material.

The volume to weight ratio of water phase to oil phase in the emulsion can be increased to 50% to about 90% of the final volume to weight ratio of water phase to oil phase in the emulsion before the final ratio is reached. Any number of steps of increasing the ratio can be performed. A polymerization initiator can be added into or after the step of increasing the volume.

The process of the present invention may provide an emulsion with a higher water and oil ratio. The process of the present invention also provides a lower residence time for mixing to achieve the same water and oil ratio. Also, the process of the present invention may provide stability improvement of the emulsion as more uniform cell sizes may result.

### DETAILED DESCRIPTION OF THE INVENTION

### I. Definitions

The following definitions are offered relative to the current invention.

All percentages, ratios and proportions herein are by weight of the final composition, unless otherwise specified. All temperatures are in degrees Celsius (°C) unless otherwise specified.

As used herein, the term "comprising" and its derivatives are intended to be open ended terms that specify the presence of the stated features, elements, components, groups, integers, and/or steps, but do not exclude the presence of other, unstated features, elements, components, groups, integers, and/or steps. This definition also applies to words of similar meaning, for example, the terms "have", "include", "be provided with" and their derivatives means that other steps, structures, elements, etc. which do not affect the end result can be added. This term encompasses the terms "consisting of" and "consisting essentially of".

"Single stage mixing" means that all of the emulsion, except the addition of the initiator phase, is accomplished in a single stage. A single stage is defined as a place where mixing occurs through either a single dynamic mixer or static mixer. A single dynamic mixer may comprise a dynamic mixer and a recirculation loop. A single static mixer may also comprise a static mixer and a recirculation loop. However, the initiator phase can be added in another mixer downstream of the first mixer.

"Multistage mixing" means more than one stage where mixing occurs. Additional material or any increase in the volume to weight ratio of water phase to oil phase in the emulsion may also occur in a mixing stage although that is not required to have a new stage. Typically, an emulsion is formed in a first stage mixer, such as a single dynamic mixer or static mixer, however, additional internal phase is added in a second mixer, or multiple additions of internal phase are added in multiple mixers all downstream of the first mixer. The addition of the initiator phase can still be accomplished in another mixer. A step in the multistage mixing process may also contain several steps or may be described as a multistaged mixing step within the multistage mixing.

"Curing" is the process of converting a HIPE to a HIPE foam. Curing involves the polymerization of monomers into polymers. A further step included in the curing process is crosslinking. A cured HIPE foam is one which has the physical properties, e.g., mechanical integrity, to be handled in subsequent processing steps (which may include a post-curing treatment to confer the final properties desired). Generally, curing is effected via the application of heat. An indication of the extent of cure is the mechanical strength of the foam, as measured by yield stress.

"Polymerization" is the part of the curing process whereby the monomers of the oil phase are converted to a relatively high molecular weight polymer.

"Crosslinking" is the part of the curing process whereby monomers having more than one functional group with respect to free radical polymerization are copolymerized into more than one chain of the growing polymer

The process for making an emulsion and for curing can described as a "batch" or "continuous" process. A "batch" process for making an emulsion occurs wherein all of the materials are added to a container. The materials may be added in sequential stages to create a multistage mixing. The mixing and formation of the emulsion occurs in the container. A "batch" process for curing a HIPE foam generally involves collecting the HIPE in a specific container in which the HIPE is cured. "Batch" would include processes wherein multiple small containers of relatively sophisticated shapes are used to collect the HIPE. Such shaped vessels can provide for "molded" shapes having three-dimensional features. A "continuous" process for making an emulsion is wherein the addition, mixing, and making of the emulsion occur in more than one location or container. Typically, a pipe, dynamic mixer, and other suitable mixing implements are included, as well as some type of continuous forming device such as an extrusion die. A "continuous" process for curing a HIPE foam generally involves collecting the HIPE on a moving web or within a pipe or tube or manifold which may pass through a heating zone and produce a continuous element of cured HIPE foam of varied shape and cross-section.

### A. General Foam Characteristics

### 1. Oil Phase Components

The continuous oil phase of the HIPE comprises monomers that are polymerized to form the solid foam structure and the emulsifier necessary to stabilize the emulsion. In general, the monomers will include from about 20 to about 97% by weight of at least one substantially water-insoluble monofunctional alkyl acrylate or alkyl methacrylate. Exemplary monomers of this type include C₄-C₁₈ alkyl acrylates and C₂-C₁₈ methacrylates. Preferred monomers of this type include 2-ethylhexyl acrylate, n-butyl acrylate, hexyl acrylate, n-octyl acrylate, n-nonyl acrylate, n-decyl acrylate, isodecyl acrylate, n-tetradecyl acrylate, benzyl acrylate, nonyl phenyl acrylate, n-hexyl methacrylate, 2-ethylhexyl methacrylate, n-octyl methacrylate, n-nonyl methacrylate, n-decyl methacrylate, isodecyl methacrylate, n-dodecyl methacrylate, n-tetradecyl methacrylate, and n-octadecyl methacrylate. As the level of these monomers in the oil phase formulation is increased, the Tg of the resulting polymeric HIPE foam tends to be reduced. This group of monomers is referred to as Tg lowering monomers and will generally comprise 20% to about 97%, more preferably 45% to about 70%, by weight of the monomer component.

The oil phase will also comprise from about 2 to about 50% by weight of a substantially water-insoluble, polyfunctional crosslinking alkyl acrylate or methacrylate. This crosslinking comonomer, or crosslinker, is added to confer strength and resilience to the resulting HIPE foam. Exemplary crosslinking monomers of this type comprise monomers containing two or more activated acrylate and/or methacrylate groups. These generally are the result of condensation reaction of acrylic acid or methacrylic acid with polyfunctional alcohols. Nonlimiting examples of this group include 1,6-hexanedioldiacrylate, 1,4-butanedioldimethacrylate, trimethylolpropane triacrylate, trimethylolpropane trimethacrylate, 1,12-dodecyldimethacrylate, 1,14-tetradecanedioldimethacrylate, ethylene glycol dimethacrylate, neopentyl triacrylate, glucose pentaacrylate, sorbitan pentaacrylate, and the like. Such di-, tri-, tetra-, and higher acrylates and methacrylates as provided by suppliers often contain impurities such as incompletely esterified alcohols that may be inimical to emulsion formation and stability. It can be useful, as detailed hereinafter, to remove these alcohols at least partially to improve emulsion stability and formation quality of the resulting HIPE foams.

Any third substantially water-insoluble comonomer may be added to the oil phase in weight percentages of from about 0% to about 10%, preferably from about 2% to about 8%, to modify properties in other ways. In certain cases, "toughening" monomers may be desired which impart toughness to the resulting HIPE. These include monomers such as styrene, vinyl chloride, isoprene, and chloroprene. Without being bound by theory, it is believed that such monomers aid in stabilizing the HIPE during curing to provide a more homogeneous and better formed HIPE foam which results in better toughness, tensile strength, abrasion resistance, etc. Monomers may also be added to confer flame retardancy as disclosed in U.S. patent 6,160,028 to Dyer. Monomers may be added to confer color (e.g., vinyl ferrocene), fluorescent properties, radiation resistance, opacity to radiation (e.g., lead tetraacrylate), to disperse charge, to reflect incident infrared light, to absorb radio waves, to form a wettable surface on the HIPE foam struts, or for any other purpose. In some cases, these additional monomers may slow the overall process of conversion of HIPE to HIPE foam, the tradeoff being necessary if the desired property is to be conferred. Thus, it is desired in some cases to minimize the amount of such monomers to keep the slowing of the rate of conversion to a minimum, or to exclude these types unless needed.

The oil phase will further contain an effective amount of emulsifier necessary for stabilizing the HIPE. Such emulsifiers are generally well known to those skilled in the art and examples are provided *infra.*

The oil phase may also contain an oil soluble initiator such a benzoyl peroxide, di-t-butyl peroxide, lauroyl peroxide, azoisobutyronitrile, 2,2'-azobis(2,4-dimethylvaleronitrile), 2,2'-azobisisobutyronitrile, and other such initiators well known to those skilled in the art. When oil phase initiators are employed, it can be preferred that their addition to the monomer phase be immediately before or just during emulsification to reduce the potential for premature polymerization.

### 2. Aqueous Phase Components

The discontinuous aqueous internal phase of the HIPE is generally one or more aqueous solutions containing one or more dissolved components. One essential dissolved component of the water phase is a water-soluble electrolyte. The dissolved electrolyte minimizes the tendency of monomers, comonomers, and crosslinkers that are primarily oil soluble to also dissolve in the water phase. Such electrolyte can include a buffering agent for the control of pH during the polymerization, including such inorganic counterions as phosphate, borate, and carbonate, and mixtures thereof, for example.

Another component of the aqueous phase is a water-soluble free-radical initiator or a "polymerization initiator" as may be known to the art. The initiator can be present at up to about 20 mole percent based on the total moles of polymerizable monomers present in the oil phase. More preferably, the initiator is present in an amount of from about 0.001 to about 10 mole percent based on the total moles of polymerizable monomers in the oil phase. Suitable initiators include ammonium persulfate, sodium persulfate, potassium persulfate, 2,2'-azobis(N,N'-dimethyleneisobutyramidine)dihydrochloride, and other azo initiators of this type. A delayed initiator or free radical inhibitor can also be used. The delayed initiators will extend the curing time but will help to extend the life of the mixing equipment. A suitable delayed initiator is TEMPO (2,2,6,6-tetremethyl-1-piperidinyloxy) which can be obtained from Aldrich.

Yet another optional component is a potentiator of the initiator, including salts comprising the sulfite moiety. A preferred example is sodium hydrosulfite (NaHSO₃). Other examples include inorganic salts of reduced transition metals such as Fe(II) sulfate and the like. Small amount of water soluble monomers may also be included. Examples include acrylic acid and vinyl acetate. The water soluble monomer may aid in making the surface of the HIPE more wettable.

Before combining the aqueous phase with the oil phase, it may be desired to degas the aqueous phase. Examples of processes to degas a component of a HIPE are included in US 5,362,244 to DesMarais et al.

### 3. Emulsifier

The emulsifier is necessary for forming and stabilizing the HIPE. The emulsifier is generally included in the oil phase and tends to be relatively hydrophobic in character. (See for example Williams, J. M., Langmuir 1991, 7, 1370-1377.) For preferred HIPEs that are polymerized to make polymeric foams, suitable emulsifiers can include sorbitan monoesters of branched C₁₆ -C₂₄ fatty acids, linear unsaturated C₁₆ -C₂₂ fatty acids, and linear saturated C₁₂ -C₁₄ fatty acids, such as sorbitan monooleate, sorbitan monomyristate, and sorbitan monoesters derived from coconut fatty acids. Preferred emulsifiers include sorbitan monolaurate (e.g., SPAN^{®} 20, preferably greater than about 40%, more preferably greater than about 50%, most preferably greater than about 70% sorbitan monolaurate), sorbitan monooleate (e.g., SPAN^{®} 80, preferably greater than about 40%, more preferably greater than about 50%, most preferably greater than about 70% sorbitan monooleate), diglycerol monooleate (e.g., preferably greater than about 40%, more preferably greater than about 50%, most preferably greater than about 70% diglycerol monooleate), diglycerol monoisostearate (e.g., preferably greater than about 40%, more preferably greater than about 50%, most preferably greater than about 70% diglycerol monoisostearate), diglycerol monomyristate (e.g., preferably greater than about 40%, more preferably greater than about 50%, most preferably greater than about 70% sorbitan monomyristate), the cocoyl (e.g., lauryl and myristoyl) ethers of diglycerol, and mixtures thereof.

Particularly useful are diglycerol monoesters of branched C₁₆-C₂₄ fatty acids, linear unsaturated C₁₆-C₂₂ fatty acids, or linear saturated C₁₂-C₁₄ fatty acids, such as diglycerol monooleate (i.e., diglycerol monoesters of C18:1 fatty acids), diglycerol monomyristate, diglycerol monoisostearate, and diglycerol monoesters of coconut fatty acids; diglycerol monoaliphatic ethers of branched C₁₆ -C₂₄ alcohols (e.g. Guerbet alcohols), linear unsaturated C₁₆-C₂₂ alcohols, and linear saturated C₁₂ -C₁₄ alcohols (e.g., coconut fatty alcohols), and mixtures of these emulsifiers. See US Patent 5,287,207 (Dyer et al.), issued Feb. 7, 1995, which describes the composition and preparation suitable polyglycerol ester emulsifiers and US Patent 5,500,451, issued Mar. 19, 1996 to Stephen A. Goldman et al., which describes the composition and preparation suitable polyglycerol ether emulsifiers. An examplary emulsifier which functions very well is diglycerol monooleate (DGMO). Other emulsifiers of this general sort also include diglycerol monomyristate (DGMM), diglycerol monoisostearate (DGMIS), diglycerol monopalmitate (DGMP), other diglycerol monoesters of coconut fatty acids, sorbitan monooleate, sorbitan monomyristate, sorbitan monoesters of coconut fatty acids, sorbitan isostearate, and like compounds and mixtures thereof. US Patent 5,786,395 (Stone et al.) issued July 28, 1998 offer further examples of these emulsifiers. Another preferred emulsifier, referred to herein as PGMIS, is a polyglycerol isostearate.

Another preferred emulsifier is described in copending US Patent 6,207,724, entitled Foam Materials and High Internal Phase Emulsions Made Using Oxidatively Stable Emulsifiers, filed in the name of Hird, et al. Such emulsifiers comprise a composition made by reacting a hydrocarbyl substituted succinic acid or anhydride or a reactive equivalent thereof with either a polyol (or blend of polyols), a polyamine (or blend of polyamines) an alkanolamine (or blend of alkanol amines), or a blend of two or more polyols, polyamines and alkanolamines. An exemplary emulsifier which functions very well is polyglycerol succinate. The lack of substantial carbon-carbon unsaturation renders them substantially oxidatively stable.

Such emulsifiers are advantageously added to the oil phase so that they comprise between about 1% and about 15% thereof. Obviously, emulsifiers that are particularly able to stabilize HIPEs at high temperatures are preferred. Diglycerol monooleate (DGMO) is exemplary in this respect.

Co-emulsifiers may also be used to provide additional control of cell size, cell size distribution, and emulsion stability, particularly at higher temperatures (e.g., greater than about 65°C). Exemplary coemulsifiers include phosphatidyl cholines and phosphatidyl choline-containing compositions, aliphatic betaines, long chain C₁₂-C₂₂ dialiphatic, short chain C₁-C₄ dialiphatic quaternary ammonium salts, long chain C₁₂-C₂₂ dialkoyl(alkenoyl)-2-hydroxyethyl, short chain C₁-C₄ dialiphatic quaternary ammonium salts, long chain C₁₂-C₂₂ dialiphatic imidazolinium quaternary ammonium salts, short chain C₁-C₄ dialiphatic, long chain C₁₂-C₂₂ monoaliphatic benzyl quaternary ammonium salts, the long chain C₁₂-C₂₂ dialkoyl(alkenoyl)-2-aminoethyl, short chain C₁-C₄ monoaliphatic, short chain C₁-C₄ monohydroxyaliphatic quaternary ammonium salts Particularly preferred is ditallow dimethyl ammonium methyl sulfate (DTDMAMS). Such coemulsifiers and additional examples are described in greater detail in US Patent 5,650,222, issued in the name of DesMarais, et al. on July 22, 1997.

### 4. Optional Ingredients

Various optional ingredients may also be included in either the water or oil phase for various reasons. Examples include antioxidants (e.g., hindered phenolics, hindered amine light stabilizers, UV absorbers), plasticizers (e.g., dioctyl phthalate, dinonyl sebacate), flame retardants (e.g., halogenated hydrocarbons, phosphates, borates, inorganic salts such as antimony trioxide or ammonium phosphate or magnesium hydroxide), dyes and pigments, fluorescers, filler particles (e.g., starch, titanium dioxide, carbon black, or calcium carbonate), fibers, chain transfer agents, odor absorbers such as activated carbon particulates, dissolved polymers and oliogomers, and such other agents as are commonly added to polymers for a variety of reasons. Such additives may be added to confer color, fluorescent properties, radiation resistance, opacity to radiation

(e.g., lead compounds), to disperse charge, to reflect incident infrared light, to absorb radio waves, to form a wettable surface on the HIPE foam struts, or for any other purpose.

### B. Processing Conditions for Obtaining HIPE Foams

Foam preparation typically involves the steps of: 1) forming a HIPE; 2) curing the HIPE under conditions suitable for forming an open-celled cellular polymeric structure; 3) optionally squeezing and washing the cellular polymeric structure to remove the original residual water phase from the polymeric foam structure and, if necessary, treating the polymeric foam structure with a hydrophilizing surfactant and/or hydratable salt to deposit any needed hydrophilizing surfactant/hydratable salt, and 4) thereafter dewatering this polymeric foam structure.

### 1. Formation of HIPE

The HIPE is formed by the following steps: A) preparing an oil and water phase and mixing the phases to make a water-in-oil emulsion and B) increasing the volume to weight ratio of the water phase to the oil phase in the emulsion. In Step A, the emulsion will be formed and will have a volume to weight ratio of water phase to oil phase of at least about 4:1, preferably, from about 4:1 to about 80:1, more preferably, from about 6:1 to about 60:1, most preferably, from about 10:1 to about 50:1. Also, the emulsion has from about 20% to about 80%, preferably from about 30% to about 70% of the final volume to weight ratio of the water phase to the oil phase.

As discussed, the oil phase will typically contain the requisite monomers, comonomers, crosslinkers, and emulsifiers, as well as optional components. The water phase will typically contain electrolyte or electrolytes and polymerization initiator or initiators. There can be one or more streams of aqueous phases and one or more streams of oil phases. The streams can be added in different mixing areas. The HIPE can be formed from the combined oil and water phases by subjecting these combined phases to shear agitation. Shear agitation is generally applied to the extent and for a time period necessary to form a stable emulsion. Such a process can be conducted in either batchwise or continuous fashion and is generally carried out under conditions suitable for forming an emulsion where the water phase droplets are dispersed to such an extent that the resulting polymeric foam will have the requisite structural characteristics. Emulsification of the oil and water phase combination will frequently involve the use of a mixing or agitation device such as an impeller.

One method of forming HIPE involves a continuous process that combines and emulsifies the requisite oil and water phases. In such a process, a liquid stream comprising the oil phase is formed. Concurrently, a separate liquid stream comprising the water phase is also formed. The two separate streams are provided to a suitable mixing chamber or zone at a suitable emulsification pressure and combined therein such that the requisite water to oil phase weight ratios previously specified are achieved.

In the mixing chamber or zone, the combined streams are generally subjected to shear agitation provided, for example, by an impeller of suitable configuration and dimensions, or by any other means of imparting shear or turbulent mixing generally known to those skilled in the art. Examples of such alternative means of providing shear include in-line mixers as are described in commonly assigned US Patent 6,369,121 B1 to Catalfamo et al., issued April 9, 2002. Shear will typically be applied to the combined oil/water phase stream at an appropriate rate and extent. One preferred method for forming HIPEs using a continuous process is described in greater detail in US Patent 5,149,720 (DesMarais et al), issued September 22, 1992 and US Patent 5,827,909 (DesMarais) issued on October, 27, 1998, which describes an improved continuous process having a recirculation loop for the HIPE. The process also allows for the formation of two or more different kinds of HIPEs in the same vessel as disclosed in US Patent 5,817,704 (Shiveley et al.) issued October 6, 1998. In this example, two or more pairs of oil and water streams may be independently mixed and then blended as required.

After Step A in which the emulsion is prepared, it is necessary to eventually increase the volume to weight ratio of water phase to oil phase in the emulsion to 100% of the final volume to weight ratio of water phase to oil phase by the mixing of additional amount of water phase with the emulsion. In the present invention, not all water phase is added into the Step A, but the remainder of the water phase is added in Step B. Step B can be performed either by one stage mixing or multistage mixing. Step B can also have multiple additions of the additional water phase to bring the final ratio up to 100%. For a single stage in Step B, the volume to weight ratio of water phase to oil phase in the emulsion is increased to 100% of the final volume to weight ratio of water phase to oil phase in the emulsion. The final volume to weight ratio of water phase to oil phase will depend upon the desired use of the material. Typically, the volume to weight ratio of water phase to oil phase is at least about 12:1, preferably, from about 12:1 to about 100:1. The final volume to weight ratio of the water phase to the oil phase is always greater than the initial ratio formed in Step A.

Step B may also contain more than one stage. The volume to weight ratio of water phase to oil phase in the emulsion can be increased in each stage or mixing only can occur in each stage. Commonly, the ratio is increased and mixing occurs in each stage. In a multistage mixing Step B, the volume to weight ratio of water phase to oil phase in the emulsion can be increased from the 20% to 80% of the final volume to weight ratio of the water phase to the oil phase to 50% to about 90% of the final volume to weight ratio of water phase to oil phase in the emulsion to finally 100% of the final volume to weight ratio of water phase to oil phase. The polymerization initiator can be added either into Step B or after Step B, but preferably added after Step B.

This multistage addition process of Step A, Step B, and initiator addition provides at least a 50% improvement in water to oil ratio for the same residence time for mixing. As a result, the HIPE with high volume to weight ratio of water phase to oil phase is available much more efficiently. Also, this multistage addition process provides much more uniform cell size. If forming an intended Thin-After-Drying (TAD) foam only by using Step A) (single stage mixer), the ratio of thick caliper to thin caliper is typically in the range of 3 to 4. In contrast, the process of the present invention (with Step B), the expansion factors typically range between 4 and 5.5. As a result, the HIPE made by the process of the present invention allows much more material on a roll as the material is thinner. It also allows for a thinner, more flexible core in the finished product. The caliper ratio of thick caliper to thin caliper can be measured according to the method described in US patent 5,387,207.

In the present invention, the water phase may be and is preferably added in the form of a fluid. In the present invention, it is important where the fluid is introduced and how the fluid is introduced because it may affect the cell size of the HIPE. The mixing energy induced by the entering stream should not be higher than the rest of the equipment or else it will dominate the cell size development. If the mixing energy induced by the entering stream is too low especially at low residence times, too much of the mixing burden can fall on the mixing equipment and the cell size may not achieve the targeted value. Thus, in order to get the highest throughput or lowest residence time and to obtain large droplet sizes (typically, about 80 to 100 microns), the fluid of the water phase preferably has a shear rate within the introductory piping just prior to introduction to the mixing chamber of from about 200 sec-1 to about 30,000 sec-1, preferably from about 500 sec-1 to about 20,000 sec-1, more preferably, from about 1,000 sec-1 to about 10,000 sec-1. Also, the fluid of the water phase has an average velocity within the introductory piping just prior to introduction to the mixing chamber of from about 20 cm/sec to about 2000 cm/sec, preferably, from about 50 cm/sec to about 1,000 cm/sec, more preferably, from about 100 cm/sec to about 500 cm/sec. To obtain small droplet sizes (typically, about 10 to 20 microns), the fluid of the water phase preferably has a shear rate within the introductory piping just prior to introduction to the mixing chamber of from about 1,000 sec-1 to about 50,000 sec-1, preferably from about 3,000 sec-1 to about 40,000 sec-1, more preferably, from about 5,000 sec-1 to about 35,000 sec-1. Also, the fluid of the water phase has an average velocity within the introductory piping just prior to introduction to the mixing chamber of from about 100 cm/sec to about 4,000 cm/sec, preferably, from about 200 cm/sec to about 3,000 cm/sec, more preferably, from about 400 cm/sec to about 2,000 cm/sec.

When forming large celled HIPE, the second stage internal phase addition in Step B is also done in such a way as to keep the shear rate and velocity as low as in the first stage of Step A. When the objective is to form small celled HIPE, the second stage internal phase addition shear rate in Step B is typically higher than in the first Step A, because in the first stage the viscosity of the contents of the mixer is low at the introduction point and the critical shear rate for droplet formation is correspondingly low. In the second stage (Step B), the aqueous phase is introduced into the emulsion from Step A, and the small celled HIPE viscosity is always higher than the starting materials, requiring a higher shear rate.

Once the final ratio is formed, the emulsion is pumped or withdrawn from the mixing stages to proceed with curing. The final emulsion volume to weight ratio of water phase to oil phase is from about 8:1 to about 140:1, preferably from about 10:1 to about 80:1 and more preferably from about 12:1 to about 65:1.

### 2. Curing the monomer component in the oil phase of the water-in-oil emulsion

The process of the present invention has a Step C of curing the monomer component in the oil phase of the water-in-oil emulsion using a polymerization reaction to form a saturate polymeric foam material. The HIPE may be cured in a batch process or in a continuous process. A measure of the extent of cure of the polymer is the strength of the foam, as measured by the yield stress. Another measure of the extent of cure of the polymer is the extent to which it swells in a good solvent such as toluene (being crosslinked, the HIPE foam does not dissolve without being chemically altered). The preferable curing step is described in US Patent 6,365,642 to Dyer et al. issued April 2, 2002.

A porous, water-filled, open-celled HIPE foam is the product obtained after curing in the polymerization reaction.

Sheets of cured HIPE foam are easier to process during subsequent treating/washing and dewatering steps, as well as to prepare the HIPE foam for use in the intended application. Alternatively, the product HIPE foam may be cut, ground or otherwise comminuted into particles, cubes, rods, spheres, plates, strands, fibers, or other desired shapes.

The aqueous phase remaining with the HIPE is typically removed by compressing the foam. Residual moisture can be removed as desired by conventional evaporative drying techniques.

### C. Specific Examples

These nonlimiting examples illustrate the specific preparation of HIPE foams according the present invention.

### Example 1

An oil phase is prepared comprising 72.13% EHA, 21.55% EGDMA, 5.62% PGMIS, and 0.70% DTDMAMS. An aqueous phase is prepared comprising 3.85% CaCl2, pH adjusted to 6.3. The aqueous phase is heated to 85°C and pumped at a volumetric flow rate of 1.287 l/min through two tubes, each a 3.97 mm diameter hole drilled through a 19.05 mm set screw in the top mounting plate of a dynamic mixer. The dynamic mixer comprises a 7.82 cm diameter shell provided with 4 rows of 17 4.76mm pins positioned 90° with respect to each other around the circumference with a center to center distance between each pin along the shell of 2.22 cm with a 28.58 mm shaft mounted with 4 rows of 17 4.76mm pins positioned 90° with respect to each other around the circumference with a center to center distance between each pin along the shaft of 2.22 cm, offset from the shell mounted pins by 1.11cm. The length of the shell pins and shaft pins are such that the shaft pin to shell gap, the shell pin to shaft gap, and the pin to pin bypass spacing are all 6.35 mm. The aqueous streams enter the vertically positioned mixer approximately 2 cm above the first row of pins on the shaft, which rotates at about 50 RPM. Fluids are withdrawn from the bottom of the mixer, and a portion is directed to a Waukesha Model 30 lobe pump. At the inlet to the pump the unheated oil phase is injected at a rate of 92 grams per minute through a 1.59 mm hole drilled in a 6.35 mm set screw mounted in a section of tubing that entered the center of a 90° elbow and directs the stream in a path parallel with the fluid flowing from the mixer through a 1.91 cm diameter section of stainless steel tubing. All mixer parts and tubing and connection are stainless steel with sanitary fittings. The discharge of the pump, rotating at an RPM to give a flow of 0.627 1/min, is conveyed back to the top of the mixer, which has a 1.91 cm entry just below the mounting flange, nearly concentric with the first row of pins on the shell, and positioned 45° from each of the adjacent pins. In this way fresh aqueous phase is introduced into a more highly concentrated emulsion. The product of the first mixer is a HIPE with large droplets of internal phase at an internal phase ratio of about 14:1 cc/gram.

The other portion of the material withdrawn from the mixer is directed to a series of 48 elements of SMX static mixers, nominally 3.81 cm in diameter. The second portion of the aqueous phase which is heated to 80° (to approximately match the temperature of the emulsion leaving the first mixer) and is flowing at 0.874 l/min is introduced through a 6.35mm diameter tube in to the center of a 3.81cm diameter elbow carrying the emulsion from the first mixer, just prior to the SMX static mixers. The resultant, still large droplet internal phase emulsion has an internal phase ratio of about 23:.5:1

The emulsion from the second mixer is directed to the bottom of a third mixer, a vertically oriented dynamic mixer with a 5.23 cm diameter shell having an impeller pinned along 21.59 cm of its length. The impeller shaft is 1.91cm in diameter with one row of 4.76mm pins having 17 rows of two pins per row offset from each other by 180°, and with another 16 rows of two similar pins per row, 90° offset from the first row of pins. The pins are spaced 12.7 mm on centers, with the 17 and 16 pin rows offset by half that distance. The pin to wall gap is 4.57mm, and the mixer rotates at about 150 RPM. The initiator phase comprises 8% sodium persulfate in potable city water, and its flow of 46 g/min is introduced into the bottom of the mixer through a 5.08 mm diameter tube centered on the mass center of the annulus formed by the shaft and shell, again directed parallel to the mass flow entering the bottom of this mixer. The resultant emulsion, now about 24:1 internal phase ratio, is directed to a die similar to that used in standard extrusions, called a coat-hanger die. The die has an exit gap of 1.6mm and a width of 25cm. The emulsion issuing from the die is collected on a Teflon coated belt to convey the emulsion to a quiescent steam chamber maintained at 97-98°C. After a residence time of about 10 minutes the continuous web of foam material is withdrawn, dewatered over vacuum slots and dried in a heated forced convection oven.

The foam has a cell size ranging from 70-130 microns and is strong and resilient and well suited for acquiring aqueous fluids, and is low in residual monomers.

The first aqueous introductory shear rate is 1748 sec⁻¹ and the second is 577. The first aqueous introductory average velocity is 87 cm/sec and the second aqueous is 46 cm/sec.

### Example 2.

An oil phase is prepared comprising 50.91% EHA, 31.82% EGDMA, 5.45%EHMA, 2.73% HDDA, 7.27% polyglycerol succinate, and 1.82% DTDMAMS. An aqueous phase is prepared comprising 3.85% CaCl2, pH adjusted to 6.3. The aqueous phase is heated to 72°C and pumped at a volumetric flow rate of 5.037 l/min through a tube, a 4.76 mm diameter hole drilled through a 19.05 mm set screw in the top mounting plate of a dynamic mixer. The dynamic mixer comprises a 7.82 cm diameter shell with a 28.58 mm shaft mounted with 3 rows of 58 3.18mm pins positioned 120° with respect to each other around the circumference with a center to center distance between each pin along the shaft of 3.23mm, with another set of 3 rows of 58 3.18mm pins offset from first set by 60° and offset on the shaft such that they are halfway between the other set of rows. Thus, the rows, if they were free to bypass one another would have a clearance of about 0.025 mm The length of the shaft pins is such that the shaft pin to shell gap is 3.05 mm. The aqueous stream enters the vertically positioned mixer approximately 2 cm above the first row of pins on the shaft, which rotates at about 800 RPM. Fluids are withdrawn from the bottom of the mixer, and a portion is directed to a Waukesha Model 030 U2 lobe pump. At the inlet to the pump the unheated oil phase is injected at a rate of 251.6 grams per minute through a 1.98 mm hole drilled in a 6.35 mm set screw mounted in a section of tubing that entered the center of a 90° elbow and directs the stream in a path parallel with the fluid flowing from the mixer through a 1.91 cm diameter section of stainless steel tubing. All mixer parts and tubing and connection are stainless steel with sanitary fittings. The discharge of the pump, rotating at an RPM to give a flow of 5.5 l/min, is conveyed back to the top of the mixer, which has a 1.91 cm entry just below the mounting flange, nearly concentric with the first row of pins on the shaft. In this way fresh aqueous phase is introduced into a more highly concentrated emulsion. The product of the first mixer is a HIPE with small droplets of internal phase at an internal phase ratio of about 20:1 cc/gram.

The other portion of the material withdrawn from the mixer is directed to a another dynamic mixer via an entry identical to the one described for the first mixer's recirculation line, with the same shell as the first The impeller pin diameter is 4.76mm and there are only 2 pins per row offset by 180°, with 34 rows spaced approximately 11.1mm on center, and a complementary set of another 34 rows with 2 pins per row offset by 90° from the first row and spaced halfway between rows.. The second portion of the aqueous phase which is heated to 70° (to approximately match the temperature of the emulsion leaving the first mixer) and is flowing at 3.962 l/min is introduced through a 3.97 mm diameter hole drilled through a 19.05 mm set screw in the top mounting plate of the second dynamic mixer approximately 2cm above the first pin row. The pin-shell gap is 6.35mm and the impeller is rotating at 1000 RPM. The resultant, small droplet internal phase emulsion has an internal phase ratio of about 35.8:1

The emulsion from the second mixer is directed to the bottom of a third mixer, a vertically oriented dynamic mixer with a 5.23 cm diameter shell having an impeller pinned along 21.59 cm of its length. The impeller shaft is 1.91cm in diameter with one row of 4.76mm pins having 21 rows of three pins per row offset from each other by 120°, and with another 21 rows of three similar pins per row, 60° offset from the first row of pins. The pins are spaced 10.5 mm on centers, with the rows offset by half that distance. The pin to wall gap is 3.05mm, and the mixer rotates at about 1800 RPM. The initiator phase comprises 11.4% sodium persulfate in potable city water, and its flow of 60.3 g/min is introduced into the bottom of the mixer through a 1.59 mm diameter hole drilled in a 6.35mm tube centered on the mass center of the annulus formed by the shaft and shell, again directed parallel to the mass flow entering the bottom of this mixer. The resultant emulsion, now about 36:1 internal phase ratio, is directed to a die similar to that used in standard extrusions, called a coat-hanger die. The die has an exit gap of 2.6mm and a width of 25cm. The emulsion issuing from the die is collected on a Teflon coated belt moving at 8 m/min to convey the emulsion to a quiescent steam chamber maintained at 97-98°C. After a residence time of about 10 minutes the continuous web of foam material is withdrawn, dewatered over vacuum slots while simultaneously being compressed by loaded rolls and then dried in a heated forced convection oven.

The foam has a cell size ranging from 10-30 microns and is strong and resilient and well suited for distributing and storing aqueous fluids, and is low in residual monomers.

The first aqueous introductory shear rate is 7900 sec⁻¹ and the second is 10,700. The first aqueous introductory average velocity is 471 cm/sec and the second aqueous is 534 cm/sec.

The disclosures of all patents, patent applications (and any patents which issue thereon, as well as any corresponding published foreign patent applications), and publications mentioned throughout this description are hereby incorporated by reference herein. It is expressly not admitted, however, that any of the documents incorporated by reference herein teach or disclose the present invention.

While various embodiments and/or individual features of the present invention have been illustrated and described, it would be obvious to those skilled in the art that various other changes and modifications can be made without departing from the spirit and scope of the invention. As will be also be apparent to the skilled practitioner, all combinations of the embodiments and features taught in the foregoing disclosure are possible and can result in preferred executions of the invention. It is therefore intended to cover in the appended claims all such changes and modifications that are within the scope of this invention.

## Claims

1. A process for the preparation of a polymeric foam material comprising the steps of:
A) preparing an oil phase and water phase and mixing the phases to make a water-in-oil emulsion wherein the emulsion has a volume to weight ratio of water phase to oil phase of at least 4:1 and from 20% to 80% of the final volume to weight ratio of water phase to oil phase;
B) increasing the volume to weight ratio of water phase to oil phase in the emulsion to 100% of the final volume to weight ratio of water phase to oil phase by the mixing of additional amount of water phase with the emulsion;
C) curing the monomer component in the oil phase of the water-in-oil emulsion using a polymerization reaction to form a saturated polymeric foam material.

2. The process according to Claim 1 wherein a polymerization initiator in added in Step B.

3. The process according to Claim 1 wherein in Step B the volume to weight ratio of water phase to oil phase in the emulsion is increased to 50% to 90% of the final volume to weight ratio of water phase to oil phase in the emulsion before reaching 100%.

4. The process according to Claim 1 wherein the Step B is performed by a single stage mixing.

5. The process according to Claim 1 wherein the Step B is performed by a multistage mixing.

6. The process according to Claim 1 where the emulsion has a final volume to weight ratio of water phase to oil phase of at from 8:1 to 140:1.

7. A process for the preparation of a polymeric foam material comprising the steps of:
A) preparing an oil phase and water phase and mixing the phases to make a water-in-oil emulsion wherein the emulsion has a volume to weight ratio of water phase to oil phase of at least 4:1 and from 20% to 80% of the final volume to weight ratio of water phase to oil phase;
B) increasing the volume to weight ratio of water phase to oil phase in the emulsion to 100% of the final volume to weight ratio of water phase to oil phase by the mixing of additional amount of water phase with the emulsion;
C) adding an effective amount of a polymerization initiator; and
D) curing the monomer component in the oil phase of the water-in-oil emulsion using a polymerization reaction to form a saturated polymeric foam material.

8. The process according to Claim 7 wherein in Step B the volume to weight ratio of water phase to oil phase in the emulsion is increased to 50% to 90% of the final volume to weight ratio of water phase to oil phase in the emulsion before reaching 100%.

9. The process according to Claim 7 wherein Step B is performed by multistage mixing.

10. A polymeric foam material prepared by the process of Claim 1.
